# EUROPEAN PATENT APPLICATION

(11) **EP 4 023 614 A1**
(43) Date of publication of application: **06.07.2022**
(21) Application number: 20902372.0
(22) Date of filing: 16.12.2020
(51) Int. Cl.: C03B 23/043, C03B 23/057

(54) **METHOD FOR PRODUCING GLASS ARTICLE AND DEVICE FOR PRODUCING GLASS ARTICLE**

(30) Priority: 19.12.2019 JP 2019229454
(71) Applicant: Nippon Electric Glass Co., Ltd., Otsu-shi, Shiga 520-8639 (JP)
(72) Inventor: IWASAKI Takanori, Otsu-shi, Shiga 520-8639 (JP); YONEZAWA Takehiro, Otsu-shi, Shiga 520-8639 (JP); TANAKA Taiki, Otsu-shi, Shiga 520-8639 (JP)
(74) Representative: Neuefeind, Regina
(86) International application number: PCT/JP2020/046855
(87) International publication number: WO 2021/125198

(57) **Abstract**

This method is for producing a glass article having through holes in the tube walls of tube glass (G1), the method comprising a through hole formation step for forming through holes by heating tube glass (G1) from above when the tube glass is placed in a posture such that the tube axis (A1) follows the horizontal direction.

## Description

### TECHNICAL FIELD

The present invention relates to a method for manufacturing a glass article and an apparatus for manufacturing a glass article.

### BACKGROUND ART

Patent Document 1 discloses a glass article that has a through hole formed in a wall of a glass tube. The through hole in the glass article can be formed by applying a flame of a burner to the glass tube.

### PRIOR ART LITERATURE

### PATENT LITERATURE

Patent Document 1: Japanese Laid-Open Patent Publication No. 2018-027864

### SUMMARY OF THE INVENTION

### PROBLEMS THAT THE INVENTION IS TO SOLVE

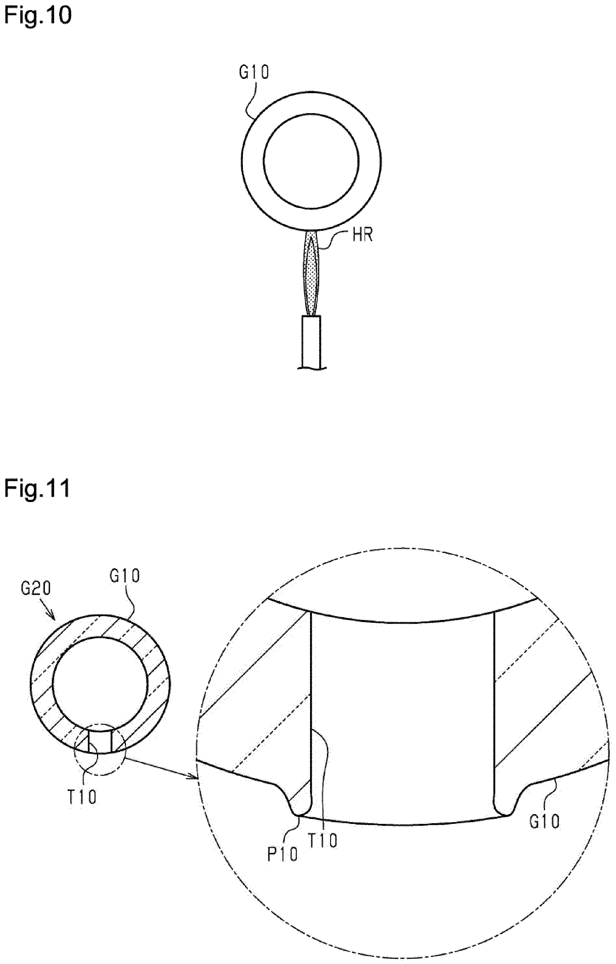

In Patent Document 1, as shown in Fig. 10, a glass tube G10 is heated from below with a heat ray HR, such as a flame of a burner, to form a through hole T10 in the wall of the glass tube G10. In this case, as shown in Fig. 11, the wall of the glass tube G10 heated and softened by the heat ray HR deforms and has a tendency to project downward from the outer circumferential surface of the tube wall due to gravity. This forms a projection P10 around the through hole T10 projecting outward of the glass tube G10 from the outer circumferential surface of the tube wall. A glass article G20 including such projection P10 may break, for example, when an impact is applied to the projection P10 during transportation of the glass article G20.

The present invention is made in view of such circumstances, and an objective of the present invention is to provide a method for manufacturing a glass article and a glass article manufacturing apparatus that allow a glass article including a through hole in a wall of a glass tube to be formed without a projection that may cause breakage.

### MEANS FOR SOLVING THE PROBLEMS

A method that solves the above-described problem is for manufacturing a glass article that includes a through hole in a wall of a glass tube. The method includes a through hole formation step of forming the through hole by heating the glass tube from above with the glass tube arranged such that a tube axis is parallel to a horizontal direction.

With this method, the heated and softened wall of the glass tube is apt to deform downward from the inner circumferential surface of the tube wall due to gravity. Accordingly, a projection is apt to being formed around the through hole projecting inward of the glass tube from the inner circumferential surface of the tube wall. That is, the through hole formation step avoids formation of a projection that projects outward of the glass tube from the outer circumferential surface of the tube wall.

Preferably, the method for manufacturing a glass article further includes a preheating step of preheating the glass tube while rotating the glass tube above a preheating device, and the through hole formation step is performed after the preheating step.

This method reduces thermal shock when the glass tube is heated in the through hole formation step.

Preferably, the method for manufacturing a glass article further includes a slow cooling step (annealing step) of arranging the glass tube above a slow-cooling heating device with the glass tube arranged such that the through hole is directed downward after the through hole formation step.

With this method, the periphery of the through hole is efficiently cooled (annealed).

In the method for manufacturing a glass article, it is preferred that the through hole be formed with a burner including a fuel injection nozzle by emitting a flame from the fuel injection nozzle. In the through hole formation step, the fuel injection nozzle is moved vertically between an emission position where a flame is applied to the glass tube and a retracted position located upward from the emission position.

This method easily controls the time during which a flame is applied to the glass tube. Further, when the fuel injection nozzle of the burner is located at the retracted position, sufficient space will be available below the fuel injection nozzle for loading and unloading the glass tube.

In the method for manufacturing a glass article, it is preferred that the glass tube have two open ends, and the through hole be formed while blowing air into the glass tube.

This method cools the inside of the glass tube with blown air and, for example, limits increases in the temperature of the wall of the glass tube at the portion opposed to a part where the through hole is formed. Further, the air blown into the glass tube forces foreign matter out of the glass tube from one open end of the glass tube.

In the method for manufacturing a glass article, it is preferred that in the through hole formation step, the glass tube be heated with an angle between a center axis of a heat source and the tube axis of the glass tube in a range of 30° or greater to 90° or less.

This method efficiently heats the wall of the glass tube and allows for formation of the through hole within a shorter amount of time.

An apparatus for manufacturing a glass article having a through hole in a wall of a glass tube includes a support member and a heating device. The support member supports the glass tube with the glass tube arranged such that a tube axis is parallel to a horizontal direction. The heating device heats the glass tube, supported by the support member, from above. The heating forms the through hole.

In the apparatus for manufacturing a glass article, it is preferred that the heating device be a burner including a fuel injection nozzle. Further, the fuel injection nozzle is configured to be vertically movable between an emission position where a flame is applied to the glass tube and a retracted position located upward from the emission position.

### EFFECT OF THE INVENTION

The present invention allows a glass article including a through hole in a wall of a glass tube to be formed without a projection that may cause breakage.

### BRIEF DESCRIPTION OF DRAWINGS

Fig. 1 is a flowchart illustrating a method for manufacturing a glass article in accordance with an embodiment.
Fig. 2 is a cross-sectional view of a glass article.
Fig. 3 is a schematic side view illustrating a preheating step of the glass article manufacturing method.
Fig. 4 is a schematic front view illustrating the preheating step.
Fig. 5 is a schematic side view illustrating a through hole formation step of the glass article manufacturing method.
Fig. 6 is a schematic front view illustrating the through hole formation step.
Fig. 7 is a schematic front view illustrating a slow cooling step of the glass article manufacturing method.
Fig. 8 is a schematic front view illustrating the slow cooling step.
Fig. 9 is a schematic side view illustrating the slow cooling step.
Fig. 10 is a schematic front view illustrating a conventional method for manufacturing a glass article.
Fig. 11 is a cross-sectional view of a conventional glass article.

### MODES FOR CARRYING OUT THE INVENTION

An embodiment of a method for manufacturing a glass article and an apparatus for manufacturing a glass article will now be described with reference to the drawings. To facilitate understanding, some of the elements may be illustrated in an exaggerated or simplified manner in the drawings. Further, elements may not be to drawn to scale.

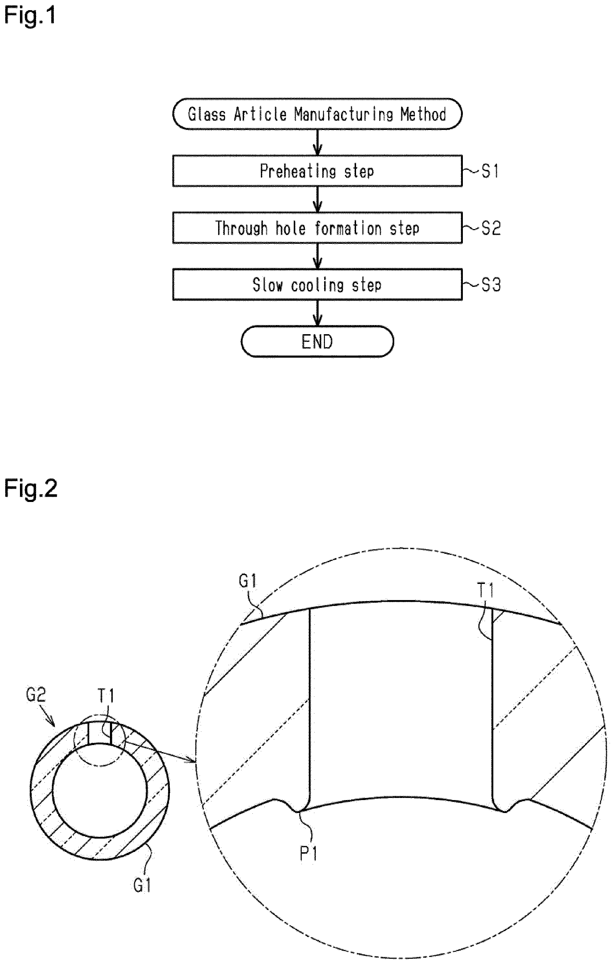

The method for manufacturing a glass article is a method that heats a glass tube G1 to manufacture a glass article G2 that includes a through hole T1 in a wall of the glass tube G1 as shown in Fig. 2. As shown in Fig. 1, the method for manufacturing a glass article in accordance with the present embodiment includes a preheating step (step S1), a through hole formation step (step S2), and a slow cooling step (step S3). The glass tube G1 may be, for example, a tube cut out, over a predetermined length, from a straight tube formed from molten glass through the Danner process or the down-draw process (Vello process).

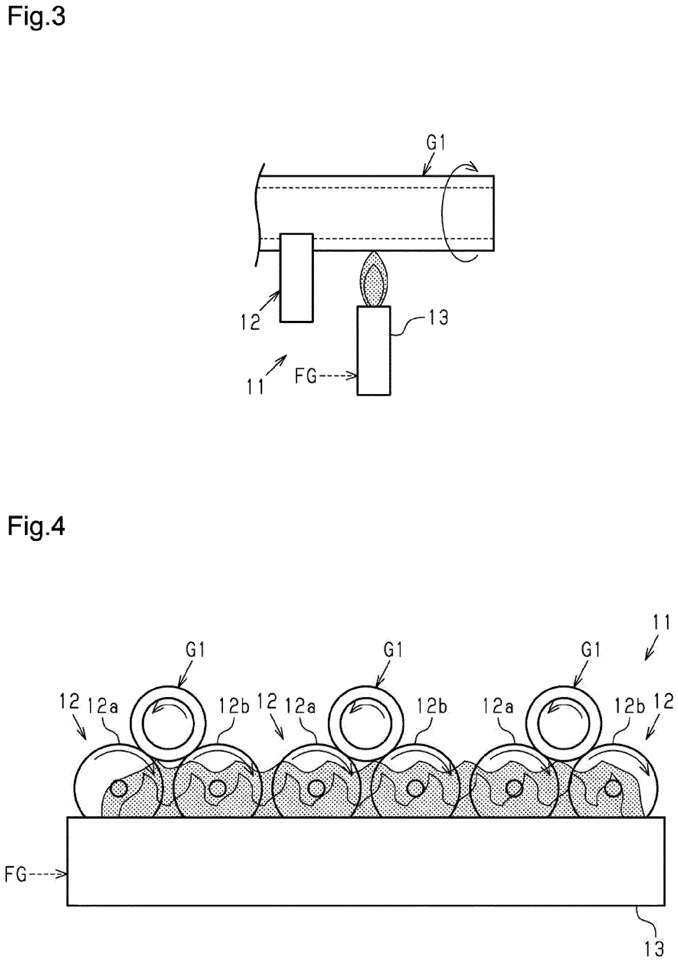

As shown in Figs. 3 and 4, a glass article manufacturing apparatus 11 includes a rotation mechanism 12 and a preheating device 13. In the preheating step of step S1, the glass tube G1 is preheated by the preheating device 13 while the glass tube G1 is rotated by the rotation mechanism 12 above the preheating device 13. The preheating step of step S1 preheats the glass tube G1 partially in a tube axial direction of the glass tube G1 and entirely in the circumferential direction of the glass tube G1.

The rotation mechanism 12 used in the preheating step of step S1 includes a first roller 12a and a second roller 12b. At least one of the first roller 12a and the second roller 12b is rotated and driven by a rotation driving unit (not shown). The glass tube G1 is supported by the first roller 12a and the second roller 12b and rotated by the rotated and driven rollers. The glass article manufacturing apparatus 11 includes a plurality of rotation mechanisms 12 corresponding to a plurality of glass tubes G1, respectively.

In the preheating step of step S1 of the present embodiment, a burner is used as the preheating device 13. The burner includes a fuel gas nozzle that discharges fuel gas FG. The burner in the present embodiment is a line burner. In order to heat the glass tubes G1 simultaneously, the fuel gas nozzle extends in a longitudinal direction that is parallel to the arrangement direction of the glass tubes G1.

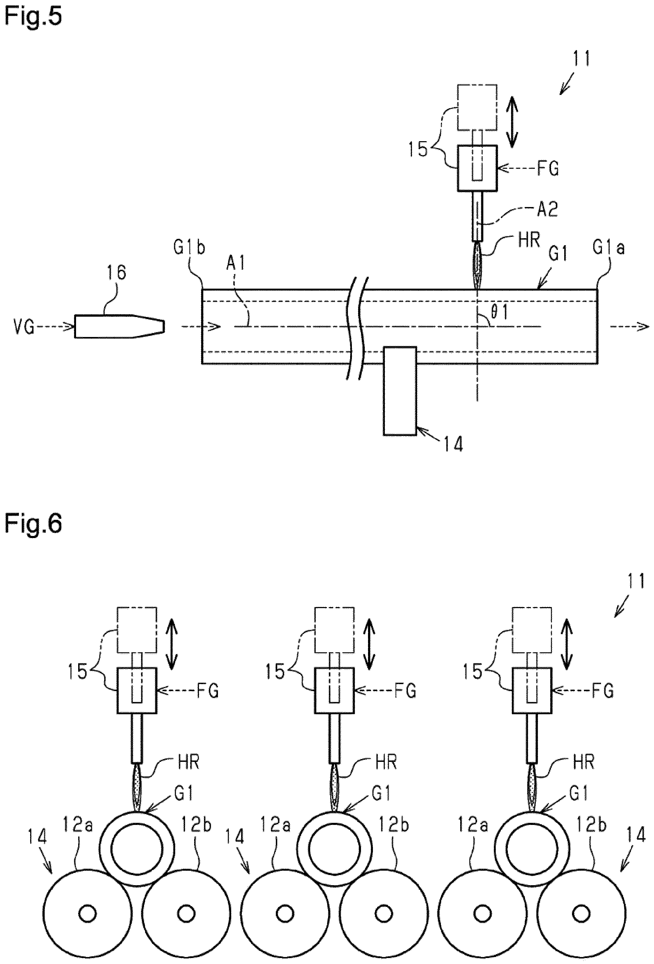

As shown in Figs. 5 and 6, in the through hole formation step of step S2, the glass tube G1 is heated from above with the glass tube G1 arranged such that its tube axis A1 is parallel to the horizontal direction to form the through hole T1. More specifically, the through hole T1 is formed by arranging the glass tube G1 such that the tube axis A1 is parallel to the horizontal direction and then heating the glass tube G1 from above. The glass article manufacturing apparatus 11 includes a support member 14 and a heating device 15. The support member 14 supports the glass tube G1 in the through hole formation step of step S2. The heating device 15 is used to form a through hole by heating the glass tube G1.

The support member 14 may be, for example, the first roller 12a and the second roller 12b of the rotation mechanism 12 in a state in which the rotation is stopped. The support member 14 is not limited to the first roller 12a and the second roller 12b of the rotation mechanism 12 and may have any structure that can support the glass tube G1 in the arrangement described above.

The heating device 15 applies a heat ray HR, which is a heat source, to the glass tube G1. The glass article manufacturing apparatus 11 includes a plurality of heating devices 15 to simultaneously form the through hole T1 in the plurality of glass tubes G1. The heating device 15 heats the glass tube G1 so that the heated region is formed at a point in the wall. In the through hole formation step of step S2 of the present embodiment, a burner is used as the heating device 15. Preferably, the burner includes a fuel injection nozzle having an inner diameter (nozzle diameter) in a range of, for example, 0.2 mm or greater to 1.0 mm or less. Preferably, the angle θ1 between a center axis A2 of the heat ray HR emitted from the heating device 15 and the tube axis A1 of the glass tube G1 is in a range of 30° or greater and 90° or less. This efficiently heats the wall of the glass tube G1 and allows the through hole T1 to be formed within a shorter amount of time. The center axis A2 of the heat ray HR in the present embodiment coincides with the center axis of the distal end of the fuel injection nozzle. The heating device 15 may be a laser beam emitting device. In this case, the center axis A2 of the heat ray HR corresponds to the optical axis of a laser beam. In the through hole formation step of step S2, it is preferred that the heat ray HR be emitted such that the center axis A2 of the heat ray HR is orthogonal to the tube axis A1 of the glass tube G1. In other words, in the through hole formation step of step S2, it is preferred that the heat ray HR be emitted such that the angle θ1 is equal to 90°.

The fuel gas nozzle of the burner in the present embodiment is configured to be vertically movable between an emission position where a flame is applied to the glass tube G1 and a retracted position located above the emission position. In Figs. 5 and 6, the solid lines show the fuel gas nozzle at the emission position, and the broken lines show the fuel gas nozzle at the retracted position. More specifically, the glass article manufacturing apparatus 11 includes a lifting device (not shown), and the fuel gas nozzle is connected to the lifting device. The glass article manufacturing apparatus 11 includes a controller that controls the lifting device. The controller of the glass article manufacturing apparatus 11 controls the length of time during which the fuel gas nozzle is located at the emission position, that is, the length of time during which a flame is applied to the glass tube G1. The emission time during which a flame is applied to the glass tube G1 may be predetermined in accordance with, for example, the wall thickness of the glass tube G1 and/or the glass composition.

As shown in Fig. 5, the glass tube G1 in the present embodiment has two open ends, namely, a first end G1a and a second end G1b. In the through hole formation step of step S2, the through hole T1 is formed at the side of the glass tube G1 closer to the first end G1a. In the through hole formation step of step S2, it is preferred that the through hole T1 be formed while blowing air into the opening in the second end G1b of the glass tube G1 and through the glass tube G1 toward the opening in the first end G1a. The glass article manufacturing apparatus 11 includes a blower 16 for blowing air into the glass tube G1. The blower 16 includes a blower nozzle that discharges blower gas VG into the glass tube G1. A suitable blower gas VG may be air or inert gas.

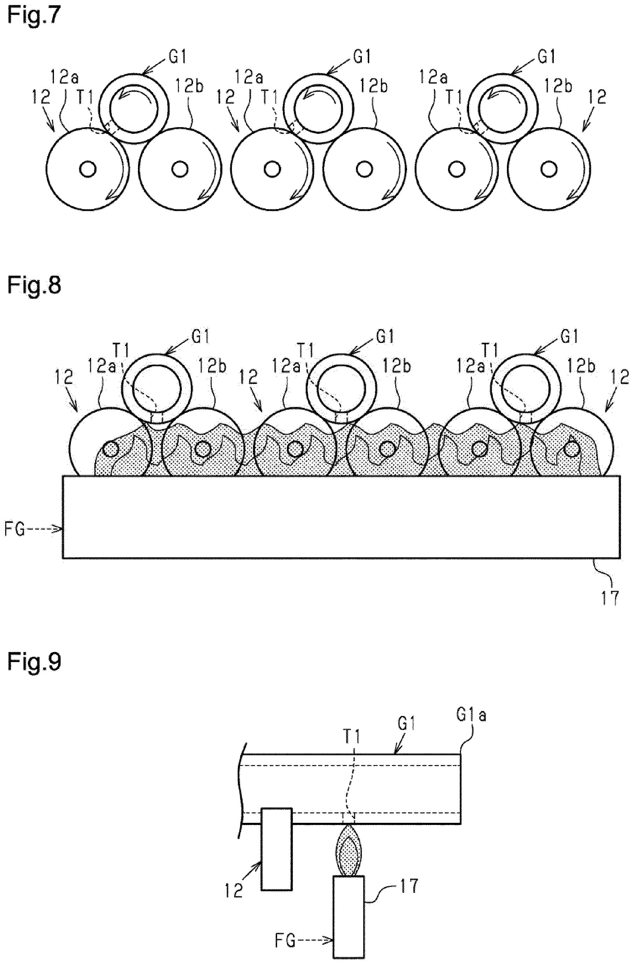

As shown in Figs. 7 to 9, the glass article manufacturing apparatus 11 further includes a slow-cooling heating device 17. The slow cooling step of step S3 may be performed with the rotation mechanism 12 and the slow-cooling heating device 17. In the slow cooling step of step S3, the glass tube G1 is arranged above the slow-cooling heating device 17 of the glass article manufacturing apparatus 11 with the glass tube G1 arranged such that the through hole T1 is directed downward. More specifically, the through hole T1 of the glass tube G1 after the through hole formation step of step S2 is directed upward. Thus, the glass tube G1 is rotated about the tube axis of the glass tube G1 as shown in Fig. 7. In this manner, the through hole T1 of the glass tube G1 after the through hole formation step of step S2 is directed downward as shown in Fig. 8.

In the slow cooling step of step S3 of the present embodiment, a burner is used as the slow-cooling heating device 17. The burner in the present embodiment is a line burner. In order to heat the glass tubes G1 simultaneously, a fuel gas nozzle extends in a longitudinal direction that is parallel to the arrangement direction of the glass tubes G1.

In the preheating step of step S1, the through hole formation step of step S2, and the slow cooling step of step S3, the burner may premix fuel gas FG and air to perform combustion. Alternatively, the burner may perform combustion while diffusing and mixing fuel gas FG and air (nozzle mix method). The premix method may be a complete premix method in which the premixed air amount is greater than the theoretical air amount and a partial premix method in which the premixed air amount is less than the theoretical air amount. A suitable fuel gas FG may be a mixed gas of a flammable gas and a combustion supporting gas. A flammable gas is, for example, hydrogen, liquified petroleum gas (LPG), or liquified natural gas (LNG). A combustion supporting gas is, for example, oxygen.

The glass article manufacturing apparatus 11 includes a movement mechanism that moves the first roller 12a and the second roller 12b. The movement mechanism moves the first roller 12a and the second roller 12b so that the steps are sequentially performed.

The main operation of the method for manufacturing the glass article and the glass article manufacturing apparatus 11 will now be described.

In the through hole formation step of step S2 in the glass article manufacturing method, the through hole T1 is formed by heating the glass tube G1 from above with the glass tube G1 arranged such that the tube axis A1 is parallel to the horizontal direction. With this method, the heated and softened wall of the glass tube G1 is apt to deform downward from the inner circumferential surface of the tube wall due to gravity. Accordingly, as shown in Fig. 2, the projection P1 is apt to being formed around the through hole T1 projecting inward of the glass tube G1 from the inner circumferential surface of the tube wall. That is, the through hole formation step of step S2 avoids formation of, for example, the projection P10 shown in Fig. 11 that projects outward of the glass tube G1 from the outer circumferential surface of the tube wall.

The operation and advantages of the present embodiment will now be described.

(1) In the through hole formation step (step S2) of the glass article manufacturing method, the through hole T1 is formed by heating the glass tube G1 from above with the glass tube G1 arranged such that the tube axis A1 is parallel to the horizontal direction. As described above, this method avoids formation of the projection projecting outward of the glass tube G1 from the outer circumferential surface of the tube wall. Thus, the projection that may cause breakage will not form on the glass article G2 having the through hole T1 in the wall of the glass tube G1.

(2) The method for manufacturing a glass article further includes the preheating step (step S1) in which the glass tube G1 is preheated while being rotated above the preheating device 13. The through hole formation step of step S2 is performed after the preheating step of step S1. This reduces thermal shock when the glass tube G1 is heated in the through hole formation step of step S2. Thus, the glass tube G1 will not break in the through hole formation step of step S2, and the yield rate of the glass article G2 will be increased.

(3) The method for manufacturing a glass article further includes the slow cooling step of step S3 in which the glass tube G1 is arranged above the slow-cooling heating device 17 with the glass tube G1 arranged such that the through hole T1 is directed downward after the through hole formation step of step S2. This efficiently cools the periphery of the through hole T1.

(4) In the through hole formation step of step S2, the fuel injection nozzle of the burner is vertically moved between the emission position where a flame is applied to the glass tube G1 and the retracted position located above the emission position. This easily controls the time during which a flame is applied to the glass tube G1. Further, when the fuel injection nozzle of the burner is located at the retracted position, sufficient space will be available below the fuel injection nozzle for loading and unloading the glass tube G1.

(5) The glass tube G1 has two open ends, and the through hole T1 is formed in step S2 while blowing air into the glass tube G1. In this case, the blown air cools the inside of the glass tube G1 and, for example, limits increases in the temperature of the wall of the glass tube G1 at the portion opposed to a part where the through hole T1 is formed. This avoids deformation of the wall of the glass tube G1 at the portion opposed to the through hole T1.

Further, when forming the through hole T1 in the glass tube G1, foreign matter such as fumes may be produced and adversely affect the cleanliness of the glass tube G1. The air blown into the glass tube G1 forces foreign matter out of the glass tube G1 from one open end of the glass tube G1. This maintains the cleanliness inside the glass tube G1.

### Modified Examples

The present embodiment may be modified as follows. The present embodiment and the following modifications can be combined as long as the combined modifications remain technically consistent with each other.

The through hole formation step of step S2 may be performed without blowing air into the glass tube G1. In other words, the through hole T1 may be formed without air blown into the glass tube G1.

In the through hole formation step of step S2, the blower nozzle of the blower 16 may be arranged outside the glass tube G1 or inserted into the glass tube G1.

The fuel injection nozzle used in the through hole formation step of step S2 may be fixed at the emission position where a flame is applied to the glass tube G1. That is, the through hole formation step of step S2 may be performed without moving the fuel injection nozzle vertically between the emission position and the retracted position. In other words, the fuel injection nozzle may be immovable from the emission position.

If the fuel injection nozzle used in the through hole formation step of step S2 is tilted and not vertical, the fuel injection nozzle may be moved between the emission position and the retracted position in the tilted direction instead of the vertical direction.

The slow cooling step of step S3 may be omitted.

The slow cooling step of step S3 is not limited to the process described above and may be performed by, for example, placing the glass tube G1 in a cooling furnace with the through hole T1 directed upward.

The preheating step of step S1 can be omitted.

The preheating step of step S1 is not limited to the process described above and may be performed by, for example, placing the glass tube G1 in a preheating furnace without rotating the glass tube G1.

The preheating device 13 used in the preheating step of step S1 and the slow-cooling heating device 17 used in the slow cooling step of step S3 do not have to be a burner. That is, the preheating device 13 and/or the slow-cooling heating device 17 may use, for example, a laser beam emitting device, a heating element that generates heat through resistive heating, or the like.

The glass article manufacturing apparatus 11 is configured to form the through hole T1 in each of the glass tubes G1. However, the glass article manufacturing apparatus 11 may be configured to form the through hole T1 in only one of the glass tubes G1.

In the method for manufacturing a glass article, the steps may be performed by transporting the glass tube G1 to the rotation mechanism 12, which is arranged in correspondence with the preheating device 13 and the slow-cooling heating device 17, and the support member 14, which is arranged in correspondence with the heating device 15 for forming a through hole.

The through hole T1 may be formed anywhere in the glass tube G1. That is, the through hole T1 does not have to be formed at the side of the glass tube G1 closer to the first end G1a. Furthermore, the glass tube G1 may include one or more through holes T1.

The glass tube G1 does not have to have two open ends and may have at least one end closed. Further, the glass tube G1 does not have to be an entirely straight tube and may be a curved tube including a curved part.

### DESCRIPTION OF REFERENCE CHARACTERS

11: glass article manufacturing apparatus, 13: preheating device, 14: support member, 15: heating device, 17: slow-cooling heating device, A1: tube axis, A2: central axis, G1: glass tube, G2: glass article, HR: heat ray (heat source), T1: through hole, θ1: angle.

## Claims

1. A method for manufacturing a glass article including a through hole in a wall of a glass tube, the method comprising:
a through hole formation step of forming the through hole by heating the glass tube from above with the glass tube arranged such that a tube axis is parallel to a horizontal direction.

2. The method for manufacturing a glass article according to claim 1, further comprising:
a preheating step of preheating the glass tube while rotating the glass tube above a preheating device,
wherein the through hole formation step is performed after the preheating step.

3. The method for manufacturing a glass article according to claim 1 or 2, further comprising:
a slow cooling step of arranging the glass tube above a slow-cooling heating device with the glass tube arranged such that the through hole is directed downward after the through hole formation step.

4. The method for manufacturing a glass article according to any one of claims 1 to 3, wherein
the through hole is formed with a burner including a fuel injection nozzle by emitting a flame from the fuel injection nozzle, and
in the through hole formation step, the fuel injection nozzle is moved vertically between an emission position where the flame is applied to the glass tube and a retracted position located upward from the emission position.

5. The method for manufacturing a glass article according to any one of claims 1 to 4, wherein the glass tube has two open ends, and the through hole is formed while blowing air into the glass tube.

6. The method for manufacturing a glass article according to any one of claims 1 to 5, wherein in the through hole formation step, the glass tube is heated with an angle between a center axis of a heat source and the tube axis of the glass tube in a range of 30° or greater to 90° or less.

7. An apparatus for manufacturing a glass article including a through hole in a wall of a glass tube, the apparatus comprising:
a support member that supports the glass tube, with the glass tube arranged such that a tube axis of the glass tube is parallel to a horizontal direction; and
a heating device that heats the glass tube, supported by the support member, from above,
wherein the heating forms the through hole.

8. The apparatus for manufacturing a glass article according to claim 7, wherein
the heating device is a burner including a fuel injection nozzle, and
the fuel injection nozzle is configured to be vertically movable between an emission position where a flame is applied to the glass tube and a retracted position located upward from the emission position.
